# EUROPEAN PATENT SPECIFICATION

(11) **EP 1 580 149 B1**
(45) Date of publication and mention of the grant of the patent: **30.07.2008**
(21) Application number: 05005763.7
(22) Date of filing: 16.03.2005
(51) Int. Cl.: B65G 27/08

(54) **Vibrating dispenser with damping means**
Vibrierender Spender mit Dämpfungsmittel
Distributeur à vibration avec dispositif amortisseur

(30) Priority: 22.03.2004 IT MI20040120 U
(43) Date of publication of application: 28.09.2005
(73) Proprietor: Cosberg S.p.A., 24030 Terno D'Isola (Bergamo) (IT)
(72) Inventor: Viscardi, Gianluigi, 24039 Sotto il Monte Giovanni XXIII BG (IT)
(74) Representative: Faraggiana, Vittorio

(56) References cited:
- DE-A1- 2 852 859
- GB-A- 1 390 505
- US-A- 4 684 010

## Description

The present invention relates to a vibrating dispenser of the type generally used for oriented feeding of small pieces along transport guides or channels.

In particular it refers to a feeder of the linear type.

Generally, these vibrating dispensers, above all of an important size, are provided with vibration-damping feet to avoid vibrations to be transmitted to the plane to which the vibrator itself is fastened. However due to the presence of feet the channel mounted on the dispenser has oscillations in space bringing about problems.

US 4,684,010 discloses a vibrating dispenser with elastically yielding damping elements disposed between the upper vibrating body and base elements.

It is a general aim of the present invention to obviate the above mentioned drawbacks by providing a vibrating dispenser having an efficient support for damping vibrations towards earth but avoiding undesirable oscillations and misalignments of the vibrating part.

In view of the above aim, in accordance with the invention, a vibrating dispenser device has been conceived having the features recited in claim 1.

For better explaining the innovative principles of the present invention and the advantages it offers over the known art, a possible exemplary embodiment applying said principles will be described hereinafter, with the aid of the accompanying drawings. In the drawings:
- Fig. 1 is a diagrammatic elevation side view of a device in accordance with the invention; and
- Fig. 2 is a diagrammatic perspective view of two portions of the device in a decoupled condition.

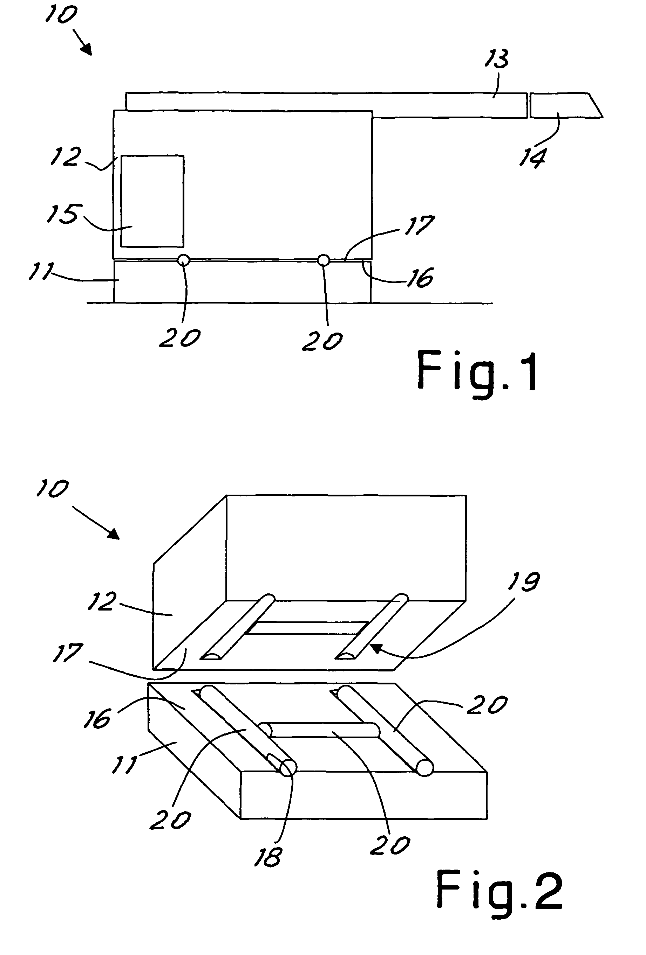

With reference to the drawings, shown in Fig. 1 is a vibrating dispenser device generally identified with 10. The device comprises a base portion 11 resting on the ground, on which through vibration-damping means, a vibrating portion 12 is mounted which is provided with feeding guides 13 along which the fed pieces (not shown) shall slide due to vibration, in order to be moved towards fixed guides 14.

The vibrating device is per se substantially of known art and therefore is not shown in detail. It comprises known means 15 (of the electroresonant type, for example) for producing the appropriate vibrations. In the instance of the machine herein shown, the vibration will be of the linear type, and also linear will be the guides along which the pieces are fed by virtue of the vibration.

As better viewed from Fig. 2, where the vibrating upper portion 12 is shown in a raised position and inclined to the base portion resting on the ground, the base portion and vibrating portion comprise faced rest surfaces 16, 17 between which elements 20 of elastically yielding material are disposed and received in cradle halves 18, 19 formed in such surfaces, said elements embodying the rest means between the two portions with damping in the vibration transmission. Each damping element 20 is elongated in parallel to said rest surface. The elongated elements are advantageously made of elastomer material.

For a more efficient damping of the transmissible vibrations, the elongated elements are oriented in at least two different directions parallel to the rest surfaces. In particular, the elongated elements are rectilinear and said two directions are orthogonal to each other, one of them being transverse to the device and the other longitudinal thereto, respectively.

The transverse elements do not allow a to-and-fro movement, whereas the longitudinal element does not allow a right-to-left movement.

In the preferred embodiment shown, elements 20 are such disposed as to form an H-shaped configuration in the plane between the rest surfaces and, in particular, the parallel legs of the H are disposed in a direction transverse to the vibrating device (with respect to the feeding guides 13).

Still advantageously, the elongated elements are of cylindrical shape with an axis parallel to the rest surfaces and have a longitudinal extension at least equal to five times their transverse extension. The cradles will be of semicylindrical shape to conveniently match the elastic elements while leaving a gap between the surfaces 16, 17 so as to avoid contacts between said surfaces during operation of the machine.

At this point it is apparent that the intended purposes have been achieved. With a device provided with damping means in accordance with the invention, it is possible to obtain, as seen, an efficient damping in the vibration transmission to earth, without those undesirable movements of the guides that in the known art cause difficulties in positioning and alignment.

Obviously, the above description of an embodiment applying the innovative principles of the present invention is taken by way of example only and therefore must not be considered as a limitation of the patent rights herein claimed. For example, the elements can be also formed by coupling several segments of an elastically yielding material.

## Claims

1. A vibrating dispenser device (10) with linear piece feeder, comprising a base portion (11) on which a vibrating portion (12) provided with feeding guides (13) is mounted through vibration-damping means, the base portion (11) and vibrating portion (12) comprising faced rest surfaces (16, 17) between which elements (20) of elastically yielding material embodying said damping means and supplying a support to the vibrating portion (12) on the base portion (11) are disposed and received in cradle halves (18, 19) formed in such surfaces, said elements (20) being each elongated in parallel to said rest surfaces (16, 17), **characterised in that** said elongated elements (20) are oriented in at least two directions that are a transverse direction and a longitudinal direction of the device (10), respectively.

2. A device as claimed in claim 1, **characterised in that** the elongated elements (20) are rectilinear and said two directions are orthogonal to each other.

3. A device as claimed in claim 2, **characterised in that** the elements (20) are such disposed as to form an H-shaped configuration in the plane between the rest surfaces (16, 17).

4. A device as claimed in claim 3, **characterised in that** the parallel legs of the "H" are disposed in a direction transverse to the device.

5. A device as claimed in claim 1, **characterised in that** the elongated elements (20) are of cylindrical configuration with an axis parallel to the rest surfaces (16, 17).

6. A device as claimed in claim 1, **characterised in that** the elongated elements (20) have a longitudinal extension at least equal to five times their transverse extension.

7. A device as claimed in claim 1, **characterised in that** the elongated elements (20) are made of an elastomer material.

## Patentansprüche

1. Vibrierender Spender (10) mit linearer Zuführung von Einzelstücken, umfassend einen Basisteil (11), an dem über Vibrationsdämpfungsmittel ein vibrierender, mit Zuführungen (13) versehender Teil (12) angebracht ist, wobei der Basisteil (11) und der vibrierende Teil (12) gegenüberliegende Aufnahmeebenen (16, 17) umfassen, zwischen welchen in aus diesen Oberflächen ausgenommenen Halbschalen aufgenommene Elemente (20) aus elastisch nachgiebigem Material angeordnet sind, in denen die genannten Dämpfungsmittel eingebaut sind, indem sie eine Auflage des vibrierenden Teils (12) auf dem Basisteil (11) bilden, wobei die Elemente (20) parallel zur Auflagefläche (16, 17) verlängert sind, **dadurch gekennzeichnet, dass** die verlängerten Elemente (20) in mindestens zwei Richtungen ausgerichtet sind, jeweils in einer Querrichtung und einer Längsrichtung der Vorrichtung (10).

2. Spender nach Anspruch 1, **dadurch gekennzeichnet, dass** die verlängerten Elemente (30) geradlinig sind und die beiden Richtungen zueinander senkrecht stehen.

3. Spender nach Anspruch 2, **dadurch gekennzeichnet, dass** die Elemente (20) derart angeordnet sind, dass sie eine H-förmige Gestaltung in der Ebene zwischen den Auflageflächen (16, 17) bilden.

4. Spender nach Anspruch 3, **dadurch gekennzeichnet, dass** die parallelen Flanken des H in einer zum Spender senkrechten Richtung angeordnet sind.

5. Spender nach Anspruch 1, **dadurch gekennzeichnet, dass** die verlängerten Elemente (20) zylindrisch mit zu den Auflageebenen (16, 17) parallelen Achse ausgebildet sind.

6. Spender nach Anspruch 1, **dadurch gekennzeichnet, dass** die verlängerten Elemente (20) eine Längsausdehnung besitzen, die mindestens fünfmal ihre Querausdehnung beträgt.

7. Spender nach Anspruch 1, **dadurch gekennzeichnet, dass** die verlängerten Elemente (20) aus einem elastomerischen Material bestehen.

## Revendications

1. Distributeur à vibration (10) avec dispositif linéaire d'alimentation des pièces, comprenant une portion de base (11) sur laquelle est montée une portion à vibration (12) munie de guidages d'alimentation (13) par l'intermédiaire d'un dispositif amortisseur des vibrations, la portion de base (11) et la portion à vibration (12) comprenant des surfaces d'appui réciproquement en vis-à-vis (16, 17) entre lesquelles sont disposés des éléments (20) en matière élastiquement extensible concrétisant ledit dispositif amortisseur et fournissant à la portion à vibration (12) un appui sur la portion de base (11), ces éléments étant reçus dans des demi-berceaux (18, 19) formés dans ces surfaces, chacun desdits éléments (20) étant allongé parallèlement auxdites surfaces d'appui (16, 17), **caractérisé en ce que** lesdits éléments allongés (20) sont orientés dans au moins deux directions qui sont respectivement une direction transversale et une direction longitudinale du dispositif (10).

2. Dispositif selon la revendication 1, **caractérisé en ce que** les éléments allongés (20) sont rectilignes et lesdits deux directions sont perpendiculaires l'une à l'autre.

3. Dispositif selon la revendication 2, **caractérisé en ce que** les éléments (20) sont disposés de manière à former une configuration en "H" dans le plan entre les surfaces d'appui (16, 17).

4. Dispositif selon la revendication 3, **caractérisé en ce que** les branches parallèles de la configuration en "H" sont disposées dans une direction transversale au dispositif.

5. Dispositif selon la revendication 1, **caractérisé en ce que** les éléments allongés (20) ont une configuration cylindrique à axe parallèle aux surfaces d'appui (16, 17).

6. Dispositif selon la revendication 1, **caractérisé en ce que** les éléments allongés (20) ont une extension longitudinale au moins égale à cinq fois leur extension transversale.

7. Dispositif selon la revendication 1, **caractérisé en ce que** les éléments allongés (20) sont fabriqués en élastomère.
